# EUROPEAN PATENT APPLICATION

(11) **EP 4 122 963 A1**
(43) Date of publication of application: **25.01.2023**
(21) Application number: 21772394.9
(22) Date of filing: 15.03.2021
(51) Int. Cl.: C08F 22/10, C08F 2/50

(54) **PHOTOCURABLE RESIN COMPOSITION**

(30) Priority: 18.03.2020 JP 2020048080
(71) Applicant: Namics Corporation, Niigata-shi, Niigata 950-3131 (JP)
(72) Inventor: SATO, Ayako, Niigata-shi, Niigata 950-3131 (JP); NAGATA, Rieko, Niigata-shi, Niigata 950-3131 (JP)
(74) Representative: Hoffmann Eitle
(86) International application number: PCT/JP2021/010401
(87) International publication number: WO 2021/187424

(57) **Abstract**

An object of the present invention is to provide a photocurable resin composition which is quickly cured through anionic polymerization even by irradiation with ultraviolet light from a ultraviolet light-emitting diode in the UV-A or UV-B range, the resin composition suitable for the manufacture of electronic components.

The photocurable resin composition of the present invention comprises (a) a 2-methylene-1,3-dicarbonyl compound, (b) an ionic photo base generator and (c) a photo-sensitizer. The 2-methylene-1,3-dicarbonyl compound is a compound comprising at least one specific structural unit, and the ionic photo base generator is a salt comprising specific anion (i) and cation (ii).

## Description

### TECHNICAL FIELD

The present invention relates to a photocurable resin composition which is quickly cured through anionic polymerization even by irradiation with ultraviolet light from a ultraviolet light-emitting diode in the UV-A or UV-B range.

### BACKGROUND ART

In recent years, in the production of electronic components, it has been investigated to use, as an adhesive or the like, a curable resin composition comprising a 2-methylene-1,3-dicarbonyl compound, such as a methylene malonate. Such a curable resin composition cures in a short time even at a low temperature, such as room temperature, and is useful for avoiding adverse effects due to heat for curing and improving production efficiency.

A 2-Methylene-1,3-dicarbonyl compound, such as a methylene malonate, is typically polymerized by Michael addition in the presence of a basic substance as an initiator. This polymerization is a kind of anionic polymerization. Being studied is a photocurable resin composition which is obtained by combining this 2-methylene-1,3-dicarbonyl compound with a photo base generator and cured by the action of a basic substance generated from a photo base generator by irradiation with an electromagnetic wave (for example, ultraviolet light). Generally, a resin composition which is cured due to radicals or cations generated by light is extremely useful because the region, timing, etc. for which the curing is caused can be easily controlled, and such a composition is used for adhesion, coating, etc. in various industrial fields.

### PRIOR ART DOCUMENTS

### Patent Documents

Patent Document 1: WO2019/116931
Patent Document 2: Japanese Translation of PCT International Application Publication No. JP-T-2015-512460
Patent Document 3: WO2019/014528
Patent Document 4: JP2017-036361

### Non-Patent Documents

Non-Patent Document 1: Plastics age, October 2018, Page 69
Non-Patent Document 2: Wako Jun-yaku Jiho, July 2017, Vol. 85, No. 3, pages 16 to 17

### SUMMARY OF THE INVENTION

### Problem to be Solved by the Invention

As an electromagnetic wave for generating a basic substance from a photo base generator, ultraviolet light is usually used. Conventionally, a mercury lamp was commonly used as a light source for ultraviolet light. However, recently, an ultraviolet light emitting diode (UV-LED), which contains no mercury (toxic) and has great industrial advantages, such as energy saving, space saving and long life, is becoming popular.

A conventional photocurable resin composition is usually premised on the use of deep ultraviolet light having a wavelength of about 254 nm emitted by a mercury lamp. For example, in Patent Document 1, exemplified is anionic polymerization of a resin composition comprising a highly reactive, anionically polymerizable compound and a photo base generator by irradiation with ultraviolet light having a wavelength of 254 nm. However, in a UV-LED which is currently widely used, the peak wavelength is 280 nm or more and, particularly in a gallium nitride-based UV-LED, the ultraviolet light emitted therefrom is limited in principle to that having a peak wavelength of about 365 nm or more (see Non-Patent Document 1). For this reason, it is impossible to efficiently generate a basic substance from a conventional photo base generator, such as that described in Patent Document 1, by the use of irradiation with ultraviolet light (particularly that in the UV-A or UV-B region) emitted from these UV-LEDs.

A general-purpose polymerization initiator capable of efficiently generating radicals by irradiation with ultraviolet light from a UV-LED is known (Patent Document 2, Non-Patent Document 1). However, curing of a curable resin composition by radical polymerization has a problem of insufficient curing in a region in contact with air due to oxygen inhibition.

As another means for curing a curable resin composition by irradiation with electromagnetic wave, photo cationic polymerization using a photo acid generator is known. However, photo cationic polymerization is not suitable for the manufacture of electronic parts containing many metal parts, since the acidic substance generated by light irradiation is often a strong acid and the acidic substance may cause corrosion of metal.

On the other hand, in photo anionic polymerization using a photo base generator, there is no problem of oxygen inhibition or corrosion by an acidic substance. Non-Patent Document 2 discloses a photo base generator which can be used with a UV-LED and a curing reaction using the same. However, this reaction is not a polymerization reaction of an olefin but a reaction in which a mixture of an epoxy resin and a thiol or carboxylic acid is cured in the presence of a basic substance as a curing accelerator. In this reaction, heating (80 to 120 °C or 150 °C) is required after exposure to light. Therefore, this reaction is not suitable for applications where there is concern about adverse effects of heat for curing.

It is an object of the present invention to provide a photocurable resin composition that is quickly cured through anionic polymerization even by irradiation with ultraviolet light from a ultraviolet light-emitting diode in the UV-A or UV-B range and suitable for the manufacture of electronic components, in order to solve the above-mentioned prior art problems.

### Means to Solve the Problem

As a result of intensive research to solve the above-mentioned problems, the present inventors have arrived at the present invention.

That is, the present invention includes, but is not limited to, the following inventions.
1. A photocurable resin composition which can be cured by irradiation with ultraviolet light in the UV-A or UV-B range, which composition comprises components (a) to (c) below:
   (a) a 2-methylene-1,3-dicarbonyl compound,
   (b) an ionic photo base generator, and
   (c) a photo-sensitizer,
   wherein:
   the 2-methylene-1,3-dicarbonyl compound is a compound comprising at least one structural unit represented by formula (I) below: 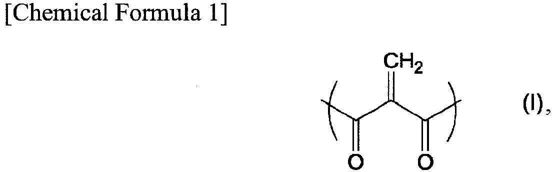 and
   the ionic photo base generator is a salt comprising anion (i) and cation (ii) below:
      (i) an anion represented by the formula (BAr₄₋ₙXₙ)⁻ (wherein Ars each independently represent an unsubstituted or substituted C₆ - C₁₀ aromatic hydrocarbon group, Xs each independently represent an unsubstituted or substituted, linear, branched or cyclic C₁ - C₆ aliphatic hydrocarbon group, and n is an integer of from 0 to 2 wherein, when n = 0, at least one Ar is a substituted C₆ - C₁₀ aromatic hydrocarbon group): and
      (ii) a cation having an amidine structure, a guanidine structure or a biguanide structure.
2. The photocurable resin composition according to item 1 above, wherein at least one Ar in the anion (i) is a substituted phenyl group.
3. The photocurable resin composition according to item 2 above, wherein the substituted phenyl group has a fluorine-containing substituent.
4. The photocurable resin composition according to item 3 above, wherein the fluorine-containing substituent is bonded to a carbon atom present at the meta position in the substituted phenyl group relative to the carbon atom directly bonded to the boron atom.
5. The photocurable resin composition according to item 3 or 4 above, wherein the fluorine-containing substituent is a fluorine atom.
6. The photocurable resin composition according to item 5 above, wherein each Ar in the anion (i) is a 3-fluorophenyl group.
7. The photocurable resin composition according to item 1 above, wherein n in the anion (i) is 0 or 1.
8. The photocurable resin composition according to item 7 above, wherein n is 0.
9. The photocurable resin composition according to any one of items 1 to 8 above, wherein the ratio of the molar amount of component (c) to the molar amount of component (b) is 0.1 to 6.

### Effect of the Invention

The photocurable resin composition of the present invention comprises, in combination with a photo-sensitizer which may be excited by absorption of ultraviolet light in the UV-A or UV-B range, an ionic photo base generator having a specific structure. Because of this fact, the photocurable resin composition of the present invention is quickly cured through anionic polymerization even by irradiation with ultraviolet light from a ultraviolet light-emitting diode in the UV-A or UV-B range, and suitable for the manufacture of electronic components. Further, the resin composition of the present invention has excellent storage stability.

### Brief Description of the Drawings

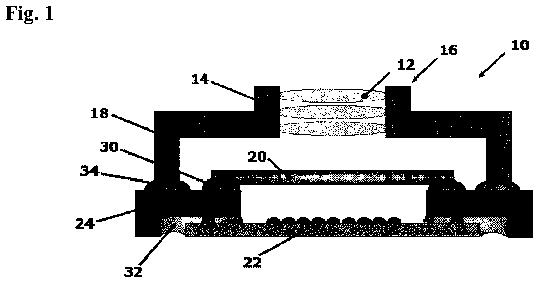

Fig. 1 is a cross-sectional view of a camera module.

### Description of Embodiments

Embodiments of the prevent invention are described in detail below.

The photocurable resin composition of the present invention, which can be cured by irradiation with ultraviolet light in the UV-A or UV-B range, comprises components (a) to (c) below:
(a) a 2-methylene-1,3-dicarbonyl compound,
(b) an ionic photo base generator, and
(c) a photo-sensitizer.

Component (a), the 2-methylene-1,3-dicarbonyl compound, is a compound comprising at least one structural unit represented by formula (I) below:

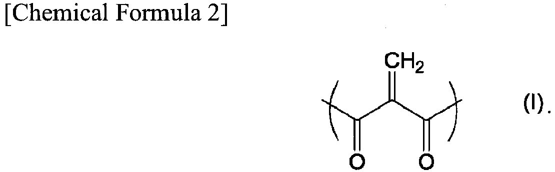

Component (b), the ionic photo base generator, is a salt comprising anion (i) and cation (ii) below:
(i) an anion represented by the formula (BAr₄₋ₙXₙ)⁻ (wherein Ars each independently represent an unsubstituted or substituted C₆ - C₁₀ aromatic hydrocarbon group, Xs each independently represent an unsubstituted or substituted, linear, branched or cyclic C₁ - C₆ aliphatic hydrocarbon group, and n is an integer of from 0 to 2 wherein, when n = 0, at least one Ar is a substituted C₆ - C₁₀ aromatic hydrocarbon group): and
(ii) a cation having an amidine structure, a guanidine structure or a biguanide structure.

Components (a) to (c) above will be described below.

### [2-Methylene-1,3-dicarbonyl Compound (Component (a))]

The 2-methylene-1,3-dicarbonyl compound (component (a)) used in the present invention is a compound comprising a structural unit represented by formula (I) below.

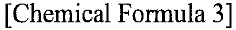

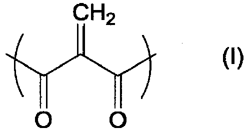

Component (a) comprises one or two or more of structural units of formula (I) above. In some embodiments, component (a) comprises two to six, preferably two, structural units of formula (I) above.

The 2-methylene-1,3-dicarbonyl compound can be used as component (a) in the present invention, because it comprises a structural unit of formula (I) above, and these structural units polymerize with each other in the presence of an initiator, typically a basic substance (for example, a basic substance generated from the ionic photo base generator (component (b)) described below). If the 2-methylene-1,3-dicarbonyl compounds comprise 2-methylene-1,3-dicarbonyl compounds that comprise two or more structural units of formula (I) above (multifunctional components), cross-links are formed during curing, and this is expected to result in improvement in physical properties of the cured product such as enhanced mechanical properties at high temperatures.

Component (a) comprises at least one 2-methylene-1,3-dicarbonyl compound. The 2-methylene-1,3-dicarbonyl compound contained in component (a) preferably has a molecular weight of 180 to 10,000, more preferably 180 to 5,000, even more preferably 180 to 2,000, even more preferably 220 to 2,000, even more preferably 200 to 1,500, even more preferably 240 to 1,500, even more preferably 250 to 1,500, particularly preferably 250 to 1,000, and most preferably 260 to 1,000. The molecular weight of the 2-methylene-1,3-dicarbonyl compound contained in component (a) and the ratio by weight of the 2-methylene-1,3-dicarbonyl compound contained, relative to the entire photocurable resin composition (or the totality of the 2-methylene-1,3-dicarbonyl compound in the photocurable resin composition) of 1, can be determined, for example, by means of reverse phase high performance liquid chromatography (reverse phase HPLC) using an ODS column as the column and a mass spectrometer (MS) with PDA (detection wavelength: 190 nm to 800 nm) or ELSD as the detectors for quantification. If the molecular weight of component (a) is less than 180, the vapor pressure at 25 °C may be excessively high, which may cause various problems arising from volatiles. In particular, volatiles will, on adhering to components in their vicinity, be cured by bases on the surface, leading to contamination of the components in their vicinity. By contrast, if the molecular weight of component (a) exceeds 10,000, it results in the viscosity of the photocurable resin composition becoming high, which decreases workability and also causes other issues such as imposing limitations on the amount of fillers that can be added.

Component (a) may comprise a multifunctional component. Multifunctional herein means that the 2-methylene-1,3-dicarbonyl compound comprises two or more structural units of formula (I) above. The number of structural units of formula (I) contained in a 2-methylene-1,3-dicarbonyl compound is referred to as the "number of functional groups" of the 2-methylene-1,3-dicarbonyl compound. Of the 2-methylene-1,3-dicarbonyl compounds, those for which the number of functional groups is one are called "monofunctional"; those for which the number of functional groups is two are called "bifunctional"; and those for which the number of functional groups is three are called "trifunctional." Since a cured product obtained using a component (a) that comprises a multifunctional component is cross-linked, the cured product has improved physical properties, such as heat resistance and mechanical properties at high temperatures. When a multifunctional component is used, the ratio by weight of the multifunctional component is preferably 0.01 or greater, relative to the entire photocurable resin composition of the present invention of 1. In an embodiment, the ratio by weight of those of component (a) that comprise two or more structural units represented by formula (I) above is preferably 0.01 to 1.00, more preferably 0.05 to 0.95, even more preferably 0.05 to 0.90, particularly preferably 0.10 to 0.90, most preferably 0.20 to 0.80, relative to the entire photocurable resin composition of the present invention of 1.

If component (a) comprises a multifunctional component, a network-like cross-linked structure is formed in the cured product, with the result that the cured product does not flow and maintains a constant storage modulus even at high temperatures, in particular, at temperatures equal to or higher than its glass transition temperature. The storage modulus of the cured product at high temperatures can be measured, for example, by dynamic mechanical analysis (DMA). Typically, if a cured product having a cross-linked structure formed therein is measured by DMA, a region known as a plateau is observed over a wide temperature range above its glass transition temperature where changes in storage modulus are relatively small as the temperature changes. The storage modulus in this plateau region is evaluated as a quantity related to crosslink density, i.e., the proportion of the multifunctional component in component (a).

In an embodiment, the ratio by weight of component (a) is preferably 0.10 to 0.999, more preferably 0.20 to 0.995, and particularly preferably 0.50 to 0.99, relative to the entire photocurable resin composition of the present invention of 1.

In an embodiment, the 2-methylene-1,3-dicarbonyl compound is represented by formula (II) below: 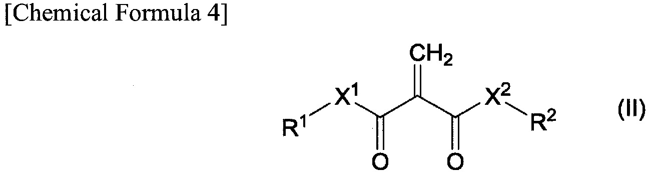 wherein
X¹ and X² each, independently, represent a single bond, O or NR³, wherein R³ represents hydrogen or a monovalent hydrocarbon group; and
R¹ and R² are each, independently, hydrogen, a monovalent hydrocarbon group, or represented by formula (III) below: 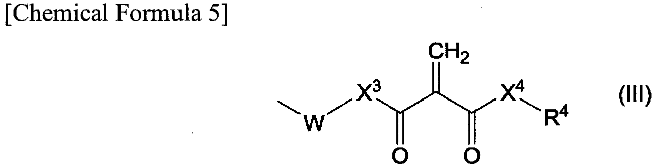 wherein
X³ and X⁴ each, independently, represent a single bond, O or NR⁵, wherein R⁵ represents hydrogen or a monovalent hydrocarbon group;
W represents a spacer; and
R⁴ represents hydrogen or a monovalent hydrocarbon group.

In an embodiment, the 2-methylene-1,3-dicarbonyl compound is represented by formula (IV) below: 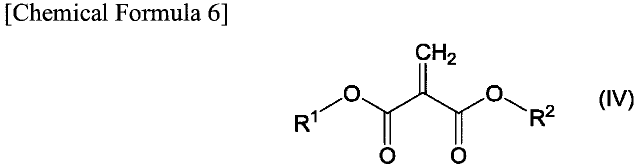 wherein R¹ and R² are each, independently, hydrogen, a monovalent
hydrocarbon group, or represented by formula (V) below: 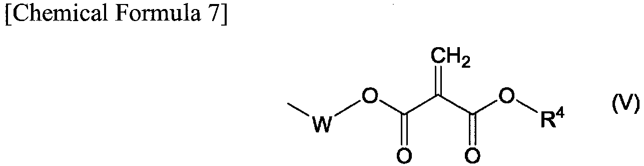 wherein
W represents a spacer; and
R⁴ represents hydrogen or a monovalent hydrocarbon group.

In another embodiment, the 2-methylene-1,3-dicarbonyl compound is a dicarbonylethylene derivative represented by formula (VI) below: 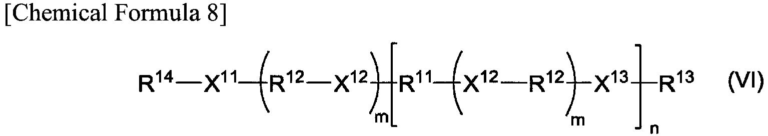 wherein
R¹¹ represents a 1,1-dicarbonylethylene unit represented by formula (VII) below: 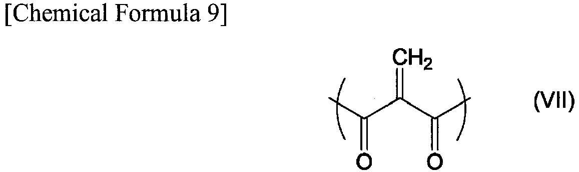
each R¹² each, independently, represents a spacer;
R¹³ and R¹⁴ each, independently, represent hydrogen or a monovalent hydrocarbon group;
X¹¹ and each X¹² and X¹³ each, independently, represent a single bond, O or NR¹⁵, wherein R¹⁵ represents hydrogen or a monovalent hydrocarbon group;
each m each, independently, represents 0 or 1; and
n represents an integer of 1 or greater and 20 or less;

As used herein, a monovalent hydrocarbon group refers to a group generated by removing one hydrogen atom from a carbon atom in a hydrocarbon. Examples of the monovalent hydrocarbon group include an alkyl group, an alkenyl group, an alkynyl group, a cycloalkyl group, an alkyl-substituted cycloalkyl group, an aryl group, an aralkyl group, and an alkaryl group, and some of these may comprise heteroatoms such as N, O, S, P and Si.

Each of the monovalent hydrocarbon groups above may be substituted with alkyl, cycloalkyl, heterocyclyl, aryl, heteroaryl, allyl, alkoxy, alkylthio, hydroxyl, nitro, amide, azide, cyano, acyloxy, carboxy, sulfoxy, acryloxy, siloxy, epoxy, or ester.

The monovalent hydrocarbon group is preferably an alkyl group, a cycloalkyl group, an aryl group, or an alkyl group substituted with a cycloalkyl group, more preferably, an alkyl group, a cycloalkyl group, or an alkyl group substituted with a cycloalkyl group.

There are no particular restrictions on the carbon number of the alkyl group, alkenyl group, and alkynyl group (hereinafter collectively referred to as the "alkyl group etc."). The carbon number of the alkyl group is typically 1 to 18, preferably 1 to 16, more preferably 2 to 12, even more preferably 3 to 10, particularly preferably 4 to 8. The carbon number of the alkenyl group and the alkynyl group is typically from 2 to 12, preferably from 2 to 10, more preferably from 3 to 8, even more preferably from 3 to 7, and particularly preferably from 3 to 6. If the alkyl group etc. have a cyclic structure, the number of carbon atoms in the alkyl group etc. is typically 5 to 16, preferably 5 to 14, more preferably 6 to 12, even more preferably 6 to 10. The carbon number of the alkyl group etc. can be identified by, for example, reverse phase HPLC, described above, or nuclear magnetic resonance (NMR).

There are no particular restrictions on the structure of the alkyl group etc. The alkyl group etc. may be linear or may have a side chain. The alkyl group etc. may have a chain structure or a cyclic structure (a cycloalkyl group, a cycloalkenyl group, and a cycloalkynyl group). The alkyl group etc. may have one or more other substituents. For example, the alkyl group etc. may have a substituent comprising an atom other than a carbon atom or a hydrogen atom as a substituent. Also, the alkyl group etc. may comprise one or more atoms other than a carbon atom or a hydrogen atom in a chain structure or a cyclic structure. Examples of the atoms other than a carbon atom or a hydrogen atom above include one or more of an oxygen atom, a nitrogen atom, a sulfur atom, a phosphorus atom, and a silicon atom.

Specific examples of the alkyl group include a methyl group, an ethyl group, an n-propyl group, an i-propyl group, an n-butyl group, an i-butyl group, a sec-butyl group, a t-butyl group, a pentyl group, an isopentyl group, a neopentyl group, a hexyl group, a heptyl group, an octyl group, and a 2-ethylhexyl group. Specific examples of the cycloalkyl group include a cyclopentyl group, a cyclohexyl group, a cycloheptyl group, and a 2-methylcyclohexyl group. Examples of the alkenyl group include a vinyl group, an allyl group, and an isopropenyl group. Specific examples of the cycloalkenyl group include a cyclohexenyl group.

When the 2-methylene-1,3-dicarbonyl compound is represented by formula (II) or (IV) above and R¹ and R² are both monovalent hydrocarbon groups, it is particularly preferable that R¹ and R² are, each, an alkyl group, a cycloalkyl group, an alkyl-substituted cycloalkyl group, an aryl group, an aralkyl group, or an alkaryl groups having 2 to 8 carbons.

As used herein, a spacer refers to a divalent hydrocarbon group, more specifically a cyclic, linear or branched, substituted or unsubstituted alkylene group. There are no particular restrictions on the carbon number of the alkylene group. The carbon number of the alkylene group is usually 1 to 12, preferably 2 to 10, more preferably 3 to 8, and still more preferably 4 to 8. If desired, the alkylene group may comprise a group comprising a heteroatom selected from N, O, S, P, and Si. The alkylene group may have an unsaturated bond. In an embodiment, the spacer is an unsubstituted alkylene group having 4 to 8 carbon atoms. Preferably, the spacer is a linear, substituted or unsubstituted alkylene group, more preferably, an alkylene group having a structure represented by the formula -(CH₂)ₙ-, wherein n is an integer from 2 to 10, preferably from 4 to 8, and wherein the carbon atoms at both ends are bonded to the remaining moieties of the 2-methylene-1,3-dicarbonyl compound.

Specific examples of the divalent hydrocarbon group for the spacer include, but are not limited to, a 1,4-n-butylene group and a 1,4-cyclohexylene dimethylene group.

If the 2-methylene-1,3-dicarbonyl compound has a spacer, the number of carbon atoms in the terminal monovalent hydrocarbon group is preferably 6 or less. That is, if the 2-methylene-1,3-dicarbonyl compound is represented by formula (II) or (IV) above, it is preferable that R⁴ in formula (III) or (V) above be alkyl having 1 to 6 carbon atoms, but if either one of R¹ and R² is represented by formula (III) or formula (V) above, it is preferable that the other of R¹ and R² be alkyl having 1 to 6 carbon atoms. In this case, in formula (II) or formula (IV) above, both R¹ and R² may be represented by formula (III) or formula (V) above, and preferably, only either one of R¹ and R² is represented by formula (III) or formula (V) above. Preferably, the 2-methylene-1,3-dicarbonyl compound is represented by formula (IV) above.

Examples of particularly preferable compounds that have a spacer include compounds represented by formula (IV) above, wherein either one of R¹ and R² is any one of an ethyl group, an n-hexyl group or a cyclohexyl group, the other one is represented by formula (V) above, W is either a 1,4-n-butylene group or a 1,4-cyclohexylene dimethylene group, and R⁴ is any one of an ethyl group, an n-hexyl group or a cyclohexyl group. Further, other particularly preferable compounds include compounds represented by formula (IV) above, wherein R¹ and R² are represented by formula (V) above, W is either a 1,4-n-butylene group or a 1,4-cyclohexylene dimethylene group, and R⁴ is any one of an ethyl group, an n-hexyl group or a cyclohexyl group.

A variety of 2-methylene-1,3-dicarbonyl compounds are available from Sirrus Inc., Ohio, USA, and synthetic methods thereof are disclosed in publications of patent applications such as WO2012/054616, WO2012/054633 and WO2016/040261. If both ends of the structural unit represented by formula (I) above contained in the 2-methylene-1,3-dicarbonyl compound are bonded to oxygen atoms, 2-methylene-1,3-dicarbonyl compounds having a higher molecular weight in which a plurality of structural units represented by formula (I) above are linked via an ester bond and the spacer above can be produced by using methods known in the art such as the transesterification with a diol or a polyol disclosed in Japanese Translation of PCT International Application Publication No. JP-T-2015-518503. A 2-methylene-1,3-dicarbonyl compound thus prepared may comprise a hydroxy group in R¹ and R² in formula (II) or formula (IV) above, R⁴ in formula (III) or formula (V) above, and R¹⁴ and R¹³ in formula (VI) above. Component (a), which comprises 2-methylene-1,3-dicarbonyl compounds, can be obtained, as appropriate, by combining these 2-methylene-1,3-dicarbonyl compounds.

Specific examples of 2-methylene-1,3-dicarbonyl compounds suitable for component (a) include dibutyl methylene malonate, dipentyl methylene malonate, dihexyl methylene malonate, dicyclohexyl methylene malonate, ethyl octyl methylene malonate, propyl hexyl methylene malonate, 2-ethylhexyl-ethyl methylene malonate, ethylphenyl-ethyl methylene malonate and the like. These are preferable because of their low volatility and high reactivity. From the perspective of handleability, dihexyl methylene malonate and dicyclohexyl methylene malonate are particularly preferable.

### [Ionic photo base generator (Component (b))]

The photocurable resin composition of the present invention comprises an ionic photo base generator (component (b)). A photo base generator is a compound capable of generating a basic substance by a chemical reaction directly or indirectly involving light energy. Component (b) in the present invention undergoes a chemical reaction by energy transferred from a photo-sensitizer (component (c) described later) excited by absorption of ultraviolet light in the UV-A or UV-B region to generate a basic substance. Photo base generators can be roughly classified into ionic and nonionic ones and, in the present invention, an ionic photo base generator is used.

Component (b) is one kind of a latent initiator. That is, the basic substance generated from component (b) is expected to contribute, as an initiator, to the polymerization initiation reaction when component (a) in the photocurable resin composition is cured by Michael addition reaction. In the present invention, the compound used as component (b) may be used alone or in combination.

Component (b) is a salt comprising anion (i) and cation (ii) below:
(i) an anion represented by the formula (BAr₄₋ₙXₙ)⁻ (wherein Ars each independently represent an unsubstituted or substituted C₆ - C₁₀ aromatic hydrocarbon group, Xs each independently represent an unsubstituted or substituted, linear, branched or cyclic C₁ - C₆ aliphatic hydrocarbon group, and n is an integer of from 0 to 2 wherein, when n = 0, at least one Ar is a substituted C₆ - C₁₀ aromatic hydrocarbon group): and
(ii) a cation having an amidine structure, a guanidine structure or a biguanide structure.

Examples of Ar in anion (i) include unsubstituted or substituted phenyl groups, unsubstituted or substituted naphthyl groups, unsubstituted or substituted azulene groups, and the like.

Examples of X in anion (i) include unsubstituted or substituted C₁ - C₆ alkyl groups, unsubstituted or substituted C₃ - C₆ cycloalkyl groups, unsubstituted or substituted C₂ - C₆ alkenyl groups, unsubstituted or substituted C₂ - C₆ alkynyl groups, and the like.

In an embodiment, at least one Ar in anion (i) is a substituted phenyl group. Preferably, the substituted phenyl group has a fluorine-containing substituent. Preferably, the fluorine-containing substituent is bonded to a carbon atom present at the meta position in the substituted phenyl group relative to the carbon atom directly bonded to the boron atom. When the fluorine-containing substituent is present at the meta position in this manner, the photocurable resin composition has excellent storage stability at room temperature. In an embodiment, the fluorine-containing substituent is a fluorine atom.

Preferably, each Ar in anion (i) is a 3-fluorophenyl group.
n in anion (i) is preferably 0 or 1, more preferably 0. As described above, when n = 0, at least one of the four Ars in anion (i) must have a substituent.

In one embodiment, anion (i) is a tetrakis(monohalophenyl)borate anion, such as tetrakis(3-fluorophenyl)borate anion.

In another embodiment, anion (i) is a monoalkyltriphenylborate anion, such as n-butyltriphenylborate anion.

On the other hand, as described above, cation (ii) has an amidine structure, a guanidine structure or a biguanide structure. As used herein, an "amidine structure", "guanidine structure" or "biguanide structure" refers to the structure of a cation formed from the neutral structure corresponding to each of them by protonation, alkylation or the like of one or more nitrogen atoms therein. That is, cation (ii) comprises a cation derived from an amidine compound, a cation derived from a guanidine compound or a cation derived from a biguanide compound.

The amidine compound is preferably a compound represented by the following formula: 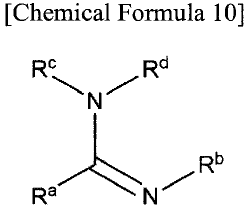 (wherein:
R^{a}, R^{b}, R^{c} and R^{d} are each independently a hydrogen atom, an unsubstituted or substituted, linear, branched or cyclic C₁ - C₆ aliphatic hydrocarbon group, or an unsubstituted or substituted C₆ - C₁₀ aromatic hydrocarbon group;
R^{a} in combination with R^{b}, R^{c} or R^{d} may be taken together with the carbon and nitrogen atoms to which they are bonded to form a ring;
R^{b} in combination with R^{c} or R^{d} may be taken together with the nitrogen atom to which they are bonded and the carbon atom to which the nitrogen atom is bonded to form a ring; and
R^{c} in combination with R^{d} may be taken together with the nitrogen atom to which they are bonded to form a ring). Each of R^{a}, R^{b}, R^{c} and R^{d} is preferably an unsubstituted linear C₁ - C₆ aliphatic hydrocarbon group, more preferably an unsubstituted linear C₁ - C₄ aliphatic hydrocarbon group, particularly preferably an unsubstituted linear C₁ - C₃ aliphatic hydrocarbon group. From the viewpoint of hydrolysis resistance, it is more preferred that each of the combination of R^{a} with R^{c} and that of R^{b} with R^{c} forms a ring. From the viewpoint of instantaneous curability, the molecular weight of the amidine compound is preferably 100 to 600, more preferably 100 to 200.

The guanidine compound is preferably a compound represented by the following formula: 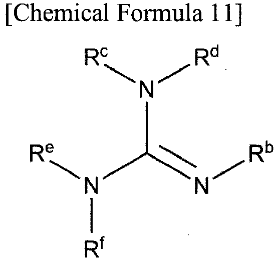 (wherein:
R^{b}, R^{c}, R^{d}, R^{e} and R^{f} are each independently a hydrogen atom, an unsubstituted or substituted, linear, branched or cyclic C₁ - C₆ aliphatic hydrocarbon group, or an unsubstituted or substituted linear, branched or cyclic C₆ - C₁₀ aromatic hydrocarbon group;
R^{b} in combination with R^{c}, R^{d}, R^{e} or R^{f} may be taken together with the nitrogen atoms to which they are bonded and the carbon atom to which the nitrogen atoms are bonded to form a ring;
R^{e} and R^{f} may, in combination with R^{c} or R^{d}, each independently be taken together with the nitrogen atoms to which they are bonded and the carbon atom to which the nitrogen atoms are bonded to form a ring;
R^{c} in combination with R^{d} may be taken together with the nitrogen atom to which they are bonded to form a ring;
R^{e} in combination with R^{f} may be taken together with the nitrogen atoms to which they are bonded to form a ring). Each of R^{b}, R^{c}, R^{d}, R^{e} and R^{f} is preferably an unsubstituted linear C₁ - C₆ aliphatic hydrocarbon group, more preferably an unsubstituted linear C₁ - C₄ aliphatic hydrocarbon group, particularly preferably an unsubstituted linear C₁ - C₃ aliphatic hydrocarbon group. When two or more of R^{b}, R^{c}, R^{d}, R^{e} and R^{f} form a ring, it is preferred that each of the combination of R^{c} with R^{e} and that of R^{b} with R^{d} is taken together to form a ring. From the viewpoint of instantaneous curability, the molecular weight of the guanidine compound is preferably 100 to 600, and more preferably 100 to 300.

The biguanide compound is preferably a compound represented by the following formula: 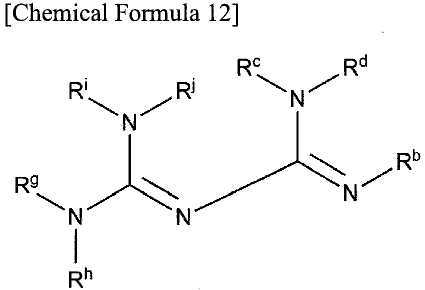 (wherein:
R^{b}, R^{c}, R^{d}, R^{g}, R^{b}, Rⁱ and R^{j} are each independently a hydrogen atom, an unsubstituted or substituted, linear, branched or cyclic C₁ - C₆ aliphatic hydrocarbon group, or an unsubstituted or substituted, linear, branched or cyclic C₆ - C₁₀ aromatic hydrocarbon group). Each of R^{b}, R^{c}, R^{d}, R^{g}, R^{h}, Rⁱ and R^{j} is preferably an unsubstituted linear or cyclic C₁ - C₆ aliphatic hydrocarbon group. From the viewpoint of instantaneous curability, the molecular weight of the biguanide compound is preferably 100 to 500, more preferably 110 to 400, particularly preferably 150 to 350. For the same reason, among R^{b}, R^{c}, R^{d}, R^{g}, R^{h}, Rⁱ and R^{j} in the biguanide compound, the number of group(s) each having 6 or more carbon atoms is preferably 4 or less, more preferably 3 or less, particularly preferably 2 or less.

Each of the amidine compound, guanidine compound and biguanide compound is an uncharged neutral molecule and, therefore, does not have a structure of cation (ii) itself. However, each of these neutral molecules can undergo structural modification obvious to those skilled in the art, such as protonation and alkylation, to form a cation. As used herein, "a cation having an amidine structure", "a cation having a guanidine structure" and "a cation having a biguanide structure" mean a cation resulting from such a structural modification of the amidine compound, guanidine compound and biguanide compound, respectively.

In one embodiment, cation (ii) is a cation having an amidine structure, such as a cation derived from 1,8-diazabicyclo[5.4.0]undecene (DBU) or 1,5-diazabicyclo[4.3.0]nonene (DBN).

In another embodiment, cation (ii) is a cation having a guanidine structure, such as a cation derived from 1,1,3,3-tetramethylguanidine (TMG) or 1,5,7-triazabicyclo[4.4.0]deca-5-ene (TBD). In another embodiment, cation (ii) is a cation having a biguanide structure (in particular, in which R^{c} is a hydrogen atom and each of R^{b}, R^{d}, R^{g}, R^{h}, Rⁱ and R^{j} is an alkyl group), such as a cation derived from 1,2-dicyclohexyl-4,4,5,5-tetramethylbiguanide or (Z)- {[bis(dimethylamino)-methylidene] amino } -N-cyclohexyl(cyclohexylamino)methanimine.

In an embodiment, such cation (ii), which generates a strong base with a pKa of 12 or greater, is advantageous from the viewpoint of instantaneous curability.

Component (b) used in the present invention is a salt comprising anion (i) and cation (ii) described above.

Specific examples of component (b) include, but are not limited to, a salt comprising protonated DBU and tetrakis(3-fluorophenyl)borate anion, a salt comprising benzylated DBU and tetrakis(3-fluorophenyl) borate anion, WPBG-300 (manufactured by FUJIFILM Wako Pure Chemical Corporation), WPBG-345 (manufactured by FUJIFILM Wako Pure Chemical Corporation), tetramethylguanidium tetrakis(3-fluorophenyl)borate, tetramethylguanidium tetrakis(4-fluorophenyl)borate, and the like.

In the present invention, the content of component (b) is preferably 0.01 mol% to 30 mol%, more preferably 0.01 mol% to 10 mol%, relative to the total amount (100 mol%) of the 2-methylene-1,3-dicarbonyl compound (component (a)) in the photocurable resin composition. When the content of component (b) is less than 0.01 mol%, curing becomes unstable. Conversely, when the content of component (b) is more than 30 mol%, a large amount of a basic substance (generated from component (b)), which has not formed a chemical bond with the resin matrix, remains in the cured product, and the mechanical strength and the like of the cured product may be deteriorated.

### [Photo-sensitizer (component (c))]

The photocurable resin composition of the present invention comprises a photo-sensitizer (component (c)). In general, a photo-sensitizer refers to a compound which is capable of being excited by absorption of light and transferring excitation energy to another substance to cause a chemical reaction of that substance without causing a chemical reaction of the photo-sensitizer itself. In the present invention, a photo-sensitizer capable of being excited by absorption of ultraviolet light in the UV-A or UV-B region and causing the above-mentioned reaction is used. In the present specification, the terms "UV-A" and "UV-B" are used in accordance with the definition by the International Commission on Illumination. That is, "UV-A" refers to ultraviolet light having a wavelength of 315 to 400 nm. "UV-B" refers to ultraviolet light having a wavelength of 280 to 315 nm. In the present specification, in accordance with convention, "UV-A" and "UV-B" may also be referred to as ultraviolet light in the UV-A region and ultraviolet light in the UV-B region, respectively.

In an embodiment, the photo-sensitizer is excited by ultraviolet light with a wavelength of 365 nm.

In the present invention, component (c) is different from component (b). The photo-sensitizer, component (c), is not covalently bonded to the ionic photo base generator, component (b). Therefore, the flexibility of the formulation design is increased, and the amount of component (c) can be appropriately selected. The photo-sensitizer may be used alone or in combination.

There is no particular limitation with respect to component (c), as long as component (c) is a photo-sensitizer capable of being excited by absorption of ultraviolet light in the UV-A or UV-B region and transferring a portion or all of the excitation energy to component (b) to induce generation of a basic substance. Component (c) is preferably a photo-sensitizer capable of being excited by absorption of ultraviolet light in the UV-A region to induce the reaction. Examples of component (c) include anthraquinone, naphthoquinone, quinone, thioxanthone, acridone, benzoyldiphenylphosphine oxide, 1,2-diketone, phenothiazine, ketocoumarin, fluorene, naphthiazoline, biacetyl, benzyl and their derivatives, perylene, substituted anthracene and the like. More specific examples of component (c) include 2-ethylanthraquinone, 2-isopropylthioxanthone, 4-benzoyl-4'-methyldiphenyl sulfide, and the like. Component (c) is preferably anthraquinone, naphthoquinone, quinone, thioxanthone or a derivative thereof and, from the viewpoint of instantaneous curability, more preferably anthraquinone or a derivative thereof.

The photocurable resin composition of the present invention comprises preferably 0.01 to 10 wt.%, more preferably 0.05 to 5 wt.%, further preferably 0.1 to 3 wt.% of component (c), based on the total weight of the photocurable resin composition.

Further, the ratio of the molar amount of component (c) to the molar amount of component (b) is preferably 0.1 to 6. When the amount of component (c) is too small, insufficient curing may occur. On the other hand, when the amount of component (c) is too large, most of the irradiated ultraviolet light is absorbed on the surface of the photocurable resin composition, and insufficient curing may occur in the inner portion of the photocurable resin composition. The ratio of the molar amount of component (c) to the molar amount of component (b) is more preferably 0.1 to 4, more preferably 0.1 to 2, particularly preferably 0.1 to 1, most preferably 0.1 to 0.99.

In the present invention, a desired curing rate and/or physical properties of the cured product can be obtained by appropriately adjusting the compounding ratio of components (b) and (c) in the photocurable resin composition, unlike the photo base generator disclosed in Patent Document 4, for example. In particular, in an embodiment of the present invention, the photocurable resin composition exhibits sufficient instantaneous curability even if the ratio of the molar amount of component (c) to the molar amount of component (b) is greater than 1.

The photocurable resin composition of the present invention can be cured in a short time by subjecting it, at ambient temperature, to ultraviolet light in the UV-A or UV-B region with a sufficient cumulative quantity of light. In an embodiment of the present invention, the irradiation intensity is preferably 100 to 10,000 mW/cm², more preferably 1,000 to 9,000 mW/cm². In an embodiment of the present invention, the photocurable resin composition can be cured by subjecting it, at ambient temperature, to ultraviolet light of 315 to 400 nm (UV-A), preferably 340 to 400 nm, more preferably 350 to 380 nm. In another aspect of the present invention, the photocurable resin composition can be cured by subjecting it, at ambient temperature, to ultraviolet light from a gallium nitride-based UV-LED. In an embodiment of the present invention, the cumulative quantity of light for the ultraviolet light to which the photocurable resin composition is subjected is preferably 200 mJ/cm² or more, more preferably 1,000 mJ/cm² or more, more preferably 2,000 mJ/cm² or more, and particularly preferably 3,000 mJ/cm² or more. There is no particular limitation with respect to the upper limit of the cumulative quantity of light, and the upper limit can be freely set as long as the purpose of the present invention is not impaired. The cumulative quantity of light for ultraviolet light in the UV-A or UV-B region can be measured using measuring instruments commonly used in the art, such as an accumulated ultraviolet meter and a light receiver. For example, the cumulative quantity of light for ultraviolet light in a wavelength range with a center wavelength of 365 nm (310 to 390 nm) can be measured using an accumulated ultraviolet meter (UIT-250 manufactured by Ushio Inc.) and a light receiver (UVD-S365 manufactured by Ushio Inc.).

In an embodiment of the present invention, the photocurable resin composition has excellent storage stability. The photocurable resin composition of the present invention kept under the conditions for storage is stable preferably for 24 hours or more, more preferably for 1 week or more, further preferably for 1 month or more. As used herein, the term "conditions for storage" refers to an environment at room temperature and humidity of 50 % ± 10 %, which environment is blocked from ultraviolet light. The term "stable" refers to a state of a substance prior to practical loss of fluidity due to proceeding of curing.

In an embodiment of the present invention, the photocurable resin composition is quickly and surely cured not only when component (a) is a highly reactive compound (e.g., diethyl methylene malonate) but also when component (a) is a compound difficult to react due to steric hindrance or the like (e.g., a monomer having a high molecular weight, such as dihexyl methylene malonate).

The photocurable resin composition of the present invention may comprise, if desired, in addition to components (a) to (c) described above, a stabilizer, an insulating or conductive filler, a surface treatment agent such as a coupling agent, a pigment, a plasticizer, a flame retardant, an ion trapper, an antifoaming agent, a leveling agent, a foam breaker, or the like.

The photocurable resin composition of the present invention comprises components (a) to (c) and, if necessary other components, such as the stabilizer described above. The photocurable resin composition of the present invention can be prepared by mixing these components. Apparatuses known in the art can be used for mixing. For example, mixing can be performed by apparatuses known in the art such as a Henschel mixer or a roll mill. These ingredients may be mixed simultaneously, or it may be such that some are mixed first, and the remainder are mixed later.

The photocurable resin composition of the present invention can be used as a one-part adhesive, in particular, a one-part adhesive for electronic components. Specifically, the photocurable resin composition of the present invention is suitable for adhesion and sealing of electronic components, as well as structural reinforcement of electronic components by filling into the gap between the electronic components. More specifically, the photocurable resin composition of the present invention can be used for adhesion, sealing and reinforcement of components for camera modules, and is particularly suitable for adhesion in image sensor modules. In the present invention, an electronic component adhered using the photocurable resin composition of the present invention is also provided. In addition, an electronic component sealed using the photocurable resin composition of the present invention is also provided. Further, an electronic component reinforced using the photocurable resin composition of the present invention is also provided. Further, the photocurable resin composition of the present invention can be used both as an insulating composition and as a conductive composition. The photocurable resin composition of the present invention may be used for permanent adhesion, sealing and reinforcement, as well as temporary adhesion, sealing and reinforcement.

As illustrated in Fig. 1, the photocurable resin composition of the present invention, for example, can be used to adhere an IR cut filter 20 to a printed circuit board 24. The photocurable resin composition of the present invention can be used to adhere an image sensor 22 to the printed circuit board 24. The photocurable resin composition of the present invention can be used to adhere a support 18 to the printed circuit board 24. A jet dispenser, an air dispenser, or the like can be used to supply the photocurable resin composition to the adherend surface. The photocurable resin composition of the present invention can be cured by irradiation with UV-A or UV-B at room temperature. The irradiation time is, for example, 0.01 second to 1 minute.

The photocurable resin composition of the present invention can also be used for an image sensor module other than a camera module. For example, it can be used for adhesion, sealing and reinforcement of components of an image sensor module that may be incorporated in a fingerprint authentication device, a face authentication device, a scanner, a medical device, or the like.

The photocurable resin composition of the present invention can also be used as a constituent material of a film. In particular, the photocurable resin composition of the present invention is suitable for a constituent material of a coverlay film for protecting wiring patterns and an interlayer adhesive film for a multilayer wiring substrate. This is because the photocurable resin composition of the present invention is cured through anionic polymerization and, therefore, causes less oxygen inhibition. The film comprising the photocurable resin composition of the present invention, preferably, can be used for electronic components.

The film comprising the photocurable resin composition of the present invention can be obtained from the photocurable resin composition of the present invention by methods known in the art. For example, the photocurable resin composition of the present invention can be applied to at least one side of a support, and then provided as a film with a support or as a film detached from the support.

### EXAMPLES

Examples and Comparative Examples of the present invention will be described below. The present invention is not limited to the following Examples and Comparative Examples. In the following Examples and Comparative Examples, the ratios of components contained in the photocurable resin compositions are indicated in part(s) by weight.

### [Preparation of photocurable resin compositions]

The raw materials for the photocurable resin compositions used in the following Examples and Comparative Examples are as follows.
2-Methylene-1,3-dicarbonyl compounds (component (a)):
(a-1) DHMM (manufactured by Sirrus Inc., Chemilian^{™} L3000 XP)
(a-2) DCHMM (manufactured by Sirrus Inc., Chemilian^{™} H4000 XP)

The specific structures for the 2-methylene-1,3-dicarbonyl compounds listed above are shown by the chemical formulas in Table 1 below.

### [Table 1]

**Table 1**

| | | |
|---|---|---|
| DHMM | Dihexyl methylene malonate | 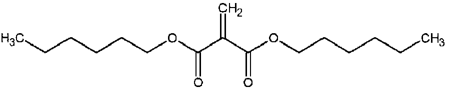 |
| DCHMM | Dicyclohexyl methylene malonate | 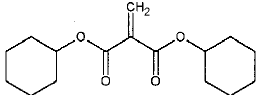 |

Photo base generator (component (b)):
(b-1) (Z)- {[bis(dimethylamino)methylidene] amino} -N-cyclohexyl-(cyclohexylamino)methaniminium tetrakis(3-fluorophenyl)borate (WPBG-345, manufactured by FUJIFILM Wako Pure Chemical Corporation)
(b-2) 1,2-dicyclohexyl-4,4,5,5-tetramethylbiguanidium n-butyltriphenylborate (WPBG-300, manufactured by FUJIFILM Wako Pure Chemical Corporation)
(b-3) Benzyl-1,8-diazabicyclo[5.4.0]-7-undecenium tetrakis(3-fluorophenyl)-borate

Precursor-1 described later (282 mg, 0.681 mmol) was dissolved in purified water, and to the resultant aqueous solution was added dropwise a chloroform solution of precursor-2 described later (200 mg, 0.619 mmol) at room temperature under stirring. The resultant mixture was stirred for 2 hours. The resultant reaction mixture was separated into the chloroform layer and the aqueous layer. The aqueous layer was extracted with chloroform, and the resultant extract was combined with the chloroform layer. The resultant chloroform solution was washed 3 times with saturated saline, dried over sodium sulfate, filtered and concentrated in vacuo to obtain 360 mg of the desired product as a light brown oil.

¹H-NMR (CDCl₃): δ7.40-7.33 (m, 3H), 7.16-7.09 (m, 4H), δ7.07-6.92 (m, 10H), 6.65-6.56 (m, 4H), 4.30 (s, 2H), 3.19-3.13 (m, 2H), 3.07-3.00 (m, 4H), 2.60-2.52 (m, 2H), 1.79-1.33 (m, 8H)

### (b-4) 1,8-diazabicyclo[5.4.0]-7-undecenium tetrakis(3-fluorophenyl)borate

DBU (manufactured by San-Apro Ltd., 83.6 mg, 0.549 mmol) was dissolved in acetone (2 mL), and the resultant solution was neutralized with 0.5 N hydrochloric acid (1.10 mL, 0.549 mmol). To the resultant mixture was added dropwise an aqueous solution of precursor-1 described later (250 mg, 0.604 mmol) at room temperature under stirring. The oily material formed in the resultant mixture was separated and dissolved in chloroform, and the resultant solution was stirred at room temperature for 2 hours. The resultant reaction mixture was diluted with chloroform. The resultant chloroform solution was washed with water and 3 times with saturated saline, dried over sodium sulfate, filtered and concentrated in vacuo to obtain 221 mg of the desired product as a white solid.

¹H-NMR (CDCl₃): δ7.20-7.14 (m, 4H), 7.10-6.98 (m, 8H), 6.67-6.58 (m, 4H), 4.95 (s, 1H), 3.19-3.13 (m, 2H), 3.07-3.00 (m, 2H), 2.60-2.52 (m, 2H), 1.89-1.83 (m, 2H), 1.64-1.37 (m, 8H)

### (b-5) Tetramethylguanidinium tetrakis(3-fluorophenyl)borate

Tetramethylguanidine (75.8 mg, 0.658 mmol) was dissolved in acetone, and the resultant solution was neutralized with 0.5 N hydrochloric acid (1.32 mL, 0.658 mmol). To the resultant mixture was added dropwise an aqueous solution of precursor-1 described later (300 mg, 0.724 mmol). The oily material formed in the resultant mixture was separated and dissolved in chloroform, and the resultant solution was stirred at room temperature for 4 hours. The resultant reaction mixture was diluted with chloroform. The resultant chloroform solution was washed with water and 3 times with saturated saline, dried over sodium sulfate, filtered and concentrated in vacuo to obtain 274.8 mg of the desired product as a white solid.

¹H-NMR (DMSO-d₆): δ7.76 (s, 2H), 7.10-6.88 (m, 8H), 6.86-6.58 (m, 8H), 2.87 (s, 12H)

### (b-6) Tetramethylguanidinium tetrakis(4-fluorophenyl)borate

Tetramethylguanidine (79.5 mg, 0.690 mmol) was dissolved in acetone, and the resultant solution was neutralized with 0.5 N hydrochloric acid (1.38 mL, 0.690 mmol). To the resultant mixture was added dropwise an aqueous solution of sodium tetrakis(4-fluorophenyl)borate dihydrate (manufactured by FUJIFILM Wako Pure Chemical Corporation) (300 mg, 0.724 mmol). The oily material formed in the resultant mixture was separated and dissolved in chloroform, and the resultant solution was stirred at room temperature for 4 hours. The resultant reaction mixture was diluted with chloroform. The resultant chloroform solution was washed with water and 3 times with saturated saline, dried over sodium sulfate, filtered and concentrated in vacuo to obtain 283.7 mg of the desired product as a white solid.

¹H-NMR (DMSO-d₆): δ7.75 (s, 2H), 7.11-7.00 (m, 8H), 6.80-6.68 (m, 8H), 2.87 (s, 12H)

Photo base generator (component (b ')):
(b-1') 1,2-Diisopropyl-3-[bis(dimethylamino)methylene]guanidinium 2-(3-benzoylphenyl)propionate (WPBG-266, manufactured by FUJIFILM Wako Pure Chemical Corporation)
(b-2') 8-(9-oxo-9H-thioxanthene-2-yl)methyl-1,8-diazabicyclo[5.4.0]-7-undecenium tetraphenylborate

This compound was synthesized in accordance with the method described in JP2017-36361.

### (b-3') 8-(9-oxo-9H-thioxanthene-2-yl)methyl-1,8-diazabicyclo[5.4.0]-7-undecenium tetrakis(3-fluorophenyl)borate

Precursor-1 described later (190 mg, 0.459 mmol) was dissolved in purified water, and to the resultant aqueous solution was added dropwise a chloroform solution of precursor-3 described later (200 mg, 0.437 mmol) at room temperature under stirring. The resultant mixture was stirred overnight for 2 days straight. The resultant reaction mixture was separated into the chloroform layer and aqueous layer. The aqueous layer was extracted with chloroform, and the resultant extract was combined with the chloroform layer. The resultant chloroform solution was washed 3 times with saturated saline, dried over sodium sulfate, filtered and concentrated in vacuo to obtain 270 mg of the desired product as a pale yellow solid.

¹H-NMR(CDC1₃): δ8.58 (d, 8.4 Hz, 1H), 8.15 (s, 1H), 7.70-7.48 (m, 4H), 7.20-6.94 (m, 13H), 6.66-6.56 (m, 4H), 4.30 (s, 2H), 3.36-3.26 (m, 2H), 3.21-3.03 (m, 4H), 2.48-2.37 (m, 2H), 1.91-1.79 (m, 2H), 1.72-1.39 (m, 6H)

### (b-4') 8-Benzyl-1,8-diazabicyclo[5.4.0]-7-undecenium tetraphenylborate (U-CAT 5002, manufactured by San-Apro Ltd.)

### (b-5') Dibenzoylferrocene (manufactured by FUJIFILM Wako Pure Chemical Corporation)

### (b-6') Tributylammonium tetraphenylborate

Tributylamine (487 mg, 2.63 mmol) was dissolved in acetone (6 mL), and the resultant solution was neutralized with 0.5 N hydrochloric acid (5.26 mL, 2.63 mmol). To the resultant mixture was added dropwise an aqueous solution of sodium tetraphenylborate (1.00 g, 2.92 mmol). The resultant mixture was stirred at room temperature for 1 hour. The crystals formed in the resultant reaction mixture were collected by filtration, washed with purified water and dried to obtain 1.18 g of the desired product as white crystals.

¹H-NMR (DMSO-d₆): δ8.85 (s, 1H), 7.23-7.13 (m, 8H), 6.98-6.88 (m, 8H), 6.83-6.74 (m, 4H), 3.09-2.95 (m, 6H), 1.63-1.50 (m, 6H), 1.38-1.24 (m, 6H), 0.91 (t 7.2 Hz, 9H)

### (b-7') 2-(Piperidine-1-carbonyl)benzaldehyde (Manufactured by ENAMINE Ltd., Catalog number: EN300-6736678)

It should be noted that 2-(piperidine-1-carbonyl)benzaldehyde is a compound which is the same as PBG1 in Production Example 1 of Patent Document 1, i. e., "2-(1-piperidinylcarbonyl)benzaldehyde".

### (b-8') Tetramethylguanidinium Tetraphenylborate

Tetramethylguanidine (160 mg, 1.39 mmol) was dissolved in acetone, and the resultant solution was neutralized with 0.5 N hydrochloric acid (2.78 mL, 1.39 mmol). To the resultant mixture was added dropwise an aqueous solution of sodium tetraphenylborate (500 mg, 1.46 mmol). The resultant mixture was stirred at room temperature for 4 hours. The crystals formed in the resultant reaction mixture were collected by filtration, washed with purified water and dried to obtain 544 mg of the desired product as white crystals.

¹H-NMR (DMSO-d₆): δ7.75 (s, 2H), 7.22-7.13 (m, 8H), 6.96-6.87 (m, 8H), 6.83-6.74 (m, 4H), 2.87 (s, 12H)

Photo radical generator (component (b")):
(b-1") 2-Methyl-4'-(methylthio)-2-morpholinopropiophenone (Omnirad 907, manufactured by FUJIFILM Wako Pure Chemical Corporation)
(b-2") 2,4,6-Trimethylbenzoyldiphenylphosphine oxide (Omnirad TPO, manufactured by IGM Resins B. V.)

Precursor-1, precursor-2 and precursor-3 were synthesized by the following methods, respectively.

### Precursor-1 (sodium tetrakis(3-fluorophenyl)borate)

This compound was synthesized by the method described in the following document.

### Journal of the American Chemical Society, (2010), 132(38), 13168-13169

### Precursor-2 (benzyl-1,8-diazabicyclo[5.4.0]-7-undecenium bromide)

This compound was synthesized by the method described in JP2014-97930.

### Precursor-3 (8-(9-oxo-9H-thioxanthene-2-yl)methyl-1,8-diazabicyclo[5.4.0]-7-undecenium bromide)

This compound was synthesized by the method described in JP2017-36361.

Photo-sensitizer (component (c)):
(c-1) 2-Ethylanthraquinone (manufactured by FUJIFILM Wako Pure Chemical Corporation)
(c-2) 2-Isopropylthioxanthone (manufactured by TOKYO CHEMICAL INDUSTRY CO., LTD.)
(c-3) 4-benzoyl-4'-methyldiphenylsulfide (manufactured by TOKYO KASEI INDUSTRY CO., LTD.)

### [Examples 1 to 9 and Comparative Examples 1 to 12]

Preparation of the photocurable resin composition was carried out in a room kept at the temperature of 22 °C and humidity of 50 % ± 10 %, the room blocked from light having a wavelength of 500 nm or less (including ultraviolet light).

In a screw tube bottle made of borosilicate glass (brown bottle for blocking light), component (b), (b ') or (b ") and component (c) were added to 2 g of component (a) so that the weight ratios of them relative to component (a) were the values shown in Table 2 to 4, with ultrasonication for up to 3 hours for dispersion, to thereby obtain a mixture.

When visual observation of the mixture resulted in a judgement that a homogeneous solution was obtained by the operation described above, the resultant solution was used as the photocurable resin composition.

When visual observation of the mixture resulted in a judgement that a homogeneous solution was not obtained by the operation described above, centrifugation operation was carried out and the supernatant portion was used as the photocurable resin composition.

In Examples and Comparative Examples, properties of the photocurable resin compositions were measured as follows.

### (Storage stability of photocurable resin compositions)

In a room kept at the temperature of 22 °C ± 5 °C and humidity of 50 % ± 10 %, the room blocked from light having a wavelength of 500 nm or less (including ultraviolet light), the time elapsed until the produced photocurable resin composition in a screw tube bottle made of borosilicate glass (brown bottle for blocking light) practically lost its fluidity (storage stability (hour)) was measured. Results are shown in Table 2 to 4. The storage stability is preferably 24 hours or more, more preferably 1 week or more, further preferably 1 month or more.

As used herein, the expression "substantially lost fluidity" means that the photocurable resin composition that fills the screw tube bottle made of borosilicate glass (brown bottle for blocking light) described above to about half its capacity reached a state in which no obvious change in shape was observed under gravity for 10 seconds after the screw tube bottle made of borosilicate glass (brown bottle for blocking light) was rapidly turned horizontal from a vertical position.

### (Instantaneous curability of photocurable resin compositions)

In a room kept at the temperature of 22 °C ± 5 °C and humidity of 50 % ± 10 %, the room blocked from light having a wavelength of 500 nm or less (including ultraviolet light), 1 drop (about 0.02 g) of a photocurable resin composition was dropped onto a slide glass, and the slide glass was continuously irradiated with ultraviolet light having a wavelength of 365 nm until the cumulative quantity of light reached 4,000 mJ/cm² (measured by an accumulated ultraviolet meter UIT-250 and a light receiver UVD-S365 (manufactured by USHIO Inc.)), using a single wavelength type UV LED light source (OmniCure (registered trademark) AC 475, manufactured by Exelitas Technologies Corp.) positioned at the height of 4 cm from the upper surface of the slide glass, while moving the light source at the moving rate of 9 mm/s. The time elapsed from the completion of the irradiation until the photocurable resin composition was cured (delay time) was measured. Results (delay time) are shown in Tables 2 to 4.

In this test, the photocurable resin composition was regarded as being cured when no obvious change in the shape of the photocurable resin composition on the slide glass was observed under gravity for 10 seconds with the slide glass kept upright.

When the photocurable resin composition was determined to be cured by the above observation immediately after the completion of irradiation, the delay time was "none".

When the photocurable resin composition was cured within 2 hours from the completion of irradiation, the time required for the curing from the completion of irradiation was recorded.

When the photocurable resin composition was not cured within 2 hours after the completion of irradiation, the observation was intermittently performed thereafter up to 48 hours after the completion of irradiation, and the time from the completion of irradiation required for the photocurable resin composition to be confirmed to be cured was recorded.

When the photocurable resin composition was not cured within 48 hours after the completion of irradiation, the delay time was "Not cured".

The above-mentioned delay time is preferably 1 hour or less, more preferably 30 minutes or less, further preferably 10 minutes or less, most preferably a few seconds or less.

### [Table 2]

**Table 2**

| | | Ex. 1 | Ex. 2 | Ex. 3 | Ex. 4 | Ex. 5 | Ex. 6 | Ex. 7 | Ex. 8 |
|---|---|---|---|---|---|---|---|---|---|
| Component (a) | (a-1) | 100 | 100 | 100 | 100 | 100 | 100 | 100 | 100 |
| | (a-2) | | | | | | | | |
| Component (b) | (b-1) | 3 | 3 | 3 | 1 | 1 | | | |
| | (b-2) | | | | | | 1 | | |
| | (b-3) | | | | | | | 3 | 3 |
| | (b-4) | | | | | | | | |
| | (b-5) | | | | | | | | |
| | (b-6) | | | | | | | | |
| Component (b') | (b-1') | | | | | | | | |
| | (b-2') | | | | | | | | |
| | (b-3') | | | | | | | | |
| | (b-4') | | | | | | | | |
| | (b-5') | | | | | | | | |
| | (b-6') | | | | | | | | |
| | (b-7') | | | | | | | | |
| | (b-8') | | | | | | | | |
| Component (b") | (b-1") | | | | | | | | |
| | (b-2") | | | | | | | | |
| Component (c) | (c-1) | 0.9 | | 0.5 | 0.3 | 2.0 | 0.3 | 1.0 | 0.6 |
| | (c-2) | | 1.0 | | | | | | |
| | (c-3) | | | | | | | | |
| Ratio of molar amount⁽ⁱ⁾ | | 0.9 | 0.9 | 0.5 | 0.9 | 6.0 | 0.8 | 0.9 | 0.5 |
| Storage stability at 25 °C⁽ⁱⁱ⁾ | | ≧1M | ≧1M | ≧1M | ≧1M | ≧**1**M | 24h | 46h | 46h |
| Delay time ⁽ⁱⁱ⁾ | | 0 | 10 | 30 | 1h | 0⁽ⁱⁱⁱ⁾ | 0 | 0 | 0 |

| | | | | | | | | | |
|---|---|---|---|---|---|---|---|---|---|
| (i) Ratio of the molar amount of component (c) to the molar amount of component (b), component (b') or component (b"). (ii) M = month, W = week, D = day, h = hour. When no unit is indicated, the unit is minute. (iii) Only surface was cured. | | | | | | | | | |

### [Table 3]

**Table 3**

| | | Ex. 9 | Ex. 10 | Ex. 11 | Ex. 12 | Com. Ex. 1 | Com. Ex. 2 | Com. Ex. 3 | Com. Ex. 4 |
|---|---|---|---|---|---|---|---|---|---|
| Component (a) | (a-1) | 100 | | 100 | 100 | 100 | 100 | 100 | 100 |
| | (a-2) | | 100 | | | | | | |
| Component (b) | (b-1) | | 3 | | | | | | |
| | (b-2) | | | | | | | | |
| | (b-3) | | | | | | | | |
| | (b-4) | 3 | | | | | | | |
| | (b-5) | | | 3 | | | | | |
| | (b-6) | | | | 3 | | | | |
| Component (b') | (b-1') | | | | | 0.5 | | | |
| | (b-2') | | | | | | 0.3 | | |
| | (b-3') | | | | | | | 3 | |
| | (b-4') | | | | | | | | 0.1 |
| | (b-5') | | | | | | | | |
| | (b-6') | | | | | | | | |
| | (b-7') | | | | | | | | |
| | (b-8') | | | | | | | | |
| Component (b") | (b-1") | | | | | | | | |
| | (b-2") | | | | | | | | |
| Component (c) | (c-1) | 1.3 | 0.9 | 1.0 | 1.3 | - | - | - | 0.04 |
| | (c-2) | | | | | - | - | - | |
| | (c-3) | | | | | - | - | - | |
| Ratio of molar amount⁽ⁱ⁾ | | 1.0 | 0.9 | 0.7 | 0.9 | - | | | 0.9 |
| Storage stability at 25 °C⁽ⁱⁱ⁾ | | ≧1M | ≧1M | 20D | 4D | 0 | 14D | ≧1M | 16D |
| Delay time⁽ⁱⁱ⁾ | | 0 | 0 | 0 | 0 | - | 1.5h | 2h | 18h |

| | | | | | | | | | |
|---|---|---|---|---|---|---|---|---|---|
| (i) Ratio of the molar amount of component (c) to the molar amount of component (b), component (b') or component (b"). (ii) M = month, W = week, D = day, h = hour. When no unit is indicated, the unit is minute. | | | | | | | | | |

### [Table 4]

**Table 4**

| | | Com. Ex. 5 | Com. Ex. 6 | Com. Ex. 7 | Com. Ex. 8 | Com. Ex. 9 | Com. Ex. 10 | Com. Ex. 11 | Com. Ex. 12 |
|---|---|---|---|---|---|---|---|---|---|
| Component (a) | (a-1) | 100 | 100 | 100 | 100 | 100 | 100 | 100 | 100 |
| | (a-2) | | | | | | | | |
| Component (b) | (b-1) | | | | | | | | |
| | (b-2) | | | | | | | | |
| | (b-3) | | | | | | | | |
| | (b-4) | | | | | | | | |
| | (b-5) | | | | | | | | |
| | (b-6) | | | | | | | | |
| Component (b') | (b-1') | | | | | | | | |
| | (b-2') | | | | | | | | |
| | (b-3') | | | | | | | | |
| | (b-4') | | | | | | | | |
| | (b-5') | 3 | | | | | | | |
| | (b-6') | | 0.3 | | | | | | |
| | (b-7') | | | 3 | 3 | | | | |
| | (b-8') | | | | | 0.3 | | | |
| Component (b") | (b-1") | | | | | | 3 | | |
| | (b-2") | | | | | | | 0.5 | 1 |
| Component (c) | (c-1) | - | 0.1 | 3.0 | | 0.16 | | - | - |
| | (c-2) | - | | | | | | - | - |
| | (c-3) | - | | | 3.9 | | | - | - |
| Ratio of molar amount⁽ⁱ⁾ | | | | 0.9 | 0.9 | 1.0 | | - | - |
| Storage stability at 25 °C(ⁱⁱ) | | ≧1M | ≧1M | ≧1M | ≧1M | 6D | ≧1M | ≧1M | ≧1M |
| Delay time⁽ⁱⁱ⁾ | | Not cured | Not cured | Not cured | Not cured | 4h | Not cured | Not cured | Not cured |

| | | | | | | | | | |
|---|---|---|---|---|---|---|---|---|---|
| (i) Ratio of the molar amount of component (c) to the molar amount of component (b), component (b') or component (b"). (ii) M = month, W = week, D = day, h = hour. When no unit is indicated, the unit is minute. | | | | | | | | | |

### (Discussion on results)

Example 1 to 12 shows that the photocurable resin composition comprising components (b) and (c) above is capable of achieving instantaneous curing by low-energy ultraviolet light with a wavelength of 365 nm, even if component (a) above is a 2-methylene-1,3-dicarbonyl compound (which may be a combination of two or more compounds) which is relatively difficult to cure, such as DHMM. This is partly due to the fact that the basic substance generated from component (b) above is a strong base with a pKa greater than 12. In addition, the photocurable resin composition comprising components (b) and (c) above exhibits excellent stability. This fact shows that under the conditions blocked from light, substantially no curing of the photocurable resin composition of the present invention proceeds.

Example 2 shows that with respect to anion (i) of component (b), even if n in formula (BAr₄₋ₙXₙ)⁻ is not 0, satisfactory instantaneous curability and stability of the photocurable resin composition can be obtained.

On the other hand, Comparative Example 1 to 12 shows that when a photo base generator (component (b')) or photo radical generator (component (b ")), which does not correspond to component (b) above, is used, instantaneous curability or stability of the photocurable resin composition cannot be obtained.

### Industrial applicability

The photocurable resin composition of the present invention is quickly cured through anionic polymerization even by irradiation with ultraviolet light (especially UV-A or UV-B) from a UV-LED, and suitable for the manufacture of electronic components. Further, the resin composition of the present invention has excellent storage stability.

### REFERENCE SIGNS LIST

- 10: Camera module
- 12: Lens
- 14: Voice coil motor
- 16: Lens unit
- 18: Support
- 20: Cutting filter
- 22: Image sensor
- 24: Printed circuit board
- 30, 32, 34: Adhesive

The disclosure of Japanese Patent Application 2020-048080 (filing date: March 18, 2020) is incorporated herein by reference in its entirety.

All publications, patent applications, and technical standards mentioned in the present specification are incorporated herein by reference to the same extent as if such individual publication, patent application, or technical standard was specifically and individually indicated to be incorporated by reference.

## Claims

1. A photocurable resin composition which can be cured by irradiation with ultraviolet light in the UV-A or UV-B range, which composition comprises components (a) to (c) below:
(a) a 2-methylene-1,3-dicarbonyl compound,
(b) an ionic photo base generator, and
(c) a photo-sensitizer,
wherein:
the 2-methylene-1,3-dicarbonyl compound is a compound comprising at least one structural unit represented by formula (I) below: 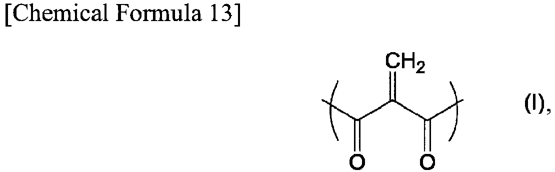 and
the ionic photo base generator is a salt comprising anion (i) and cation (ii) below:
(i) an anion represented by the formula (BAr₄₋ₙXₙ)⁻ (wherein Ars each independently represent an unsubstituted or substituted C₆ - C₁₀ aromatic hydrocarbon group, Xs each independently represent an unsubstituted or substituted, linear, branched or cyclic C₁ - C₆ aliphatic hydrocarbon group, and n is an integer of from 0 to 2 wherein, when n = 0, at least one Ar is a substituted C₆ - C₁₀ aromatic hydrocarbon group): and
(ii) a cation having an amidine structure, a guanidine structure or a biguanide structure.

2. The photocurable resin composition according to claim 1, wherein at least one Ar in the anion (i) is a substituted phenyl group.

3. The photocurable resin composition according to claim 2, wherein the substituted phenyl group has a fluorine-containing substituent.

4. The photocurable resin composition according to claim 3, wherein the fluorine-containing substituent is bonded to a carbon atom present at the meta position in the substituted phenyl group relative to the carbon atom directly bonded to the boron atom.

5. The photocurable resin composition according to claim 3 or 4, wherein the fluorine-containing substituent is a fluorine atom.

6. The photocurable resin composition according to claim 5, wherein each Ar in the anion (i) is a 3-fluorophenyl group.

7. The photocurable resin composition according to claim 1, wherein n in the anion (i) is 0 or 1.

8. The photocurable resin composition according to claim 7, wherein n is 0.

9. The photocurable resin composition according to any one of claims 1 to 8, wherein the ratio of the molar amount of component (c) to the molar amount of component (b) is 0.1 to 6.
